# EUROPÄISCHE PATENTANMELDUNG

(11) **EP 4 703 532 A1**
(43) Veröffentlichungstag der Anmeldung: **04.03.2026**
(21) Anmeldenummer: 25195609.0
(22) Anmeldetag: 13.08.2025
(51) Int. Cl.: E04F 15/10, B27N 3/00, B32B 9/02, B32B 21/12

(54) **KOMPOSITELEMENT MIT SCHALLREDUKTIONSEFFEKT**

(30) Priorität: 29.08.2024 DE 102024124641
(71) Anmelder: Stranak, Thorsten, 97922 Lauda (DE)
(72) Erfinder: Stranak, Walter, 97922 Lauda-Königshofen (DE)
(74) Vertreter: Gleim Petri Patent- und Rechtsanwaltspartnerschaft mbB

(57) **Zusammenfassung**

Es wird ein Kompositelement (2, 2a) mit Schallreduktionseffekt bereitgestellt. Das Kompositelement (2, 2a) weist auf: eine Trägerplatte (4), eine mit der Trägerplatte (4) verbundene Lackschicht (6), die Korkpulver (12) enthält, und eine Deckschicht (14), die mit einer der Trägerplatte (4) abgewandten Seite der Lackschicht (6) verbunden ist.

## Beschreibung

Die Erfindung betrifft ein Kompositelement mit Schallreduktionseffekt, sowie ein Fußbodenelement und ein Möbelstück mit oder ausgebildet aus einem solchen Kompositelement.

EP 4 382 577 A1 offenbart eine Beschichtung für ein Fußbodenelement, die einen Beschichtungslack zum Auftragen auf das Fußbodenelement aufweist, wobei der Beschichtungslack ein Korkpulver umfasst. Der Beschichtungslack ist auf der der Sichtseite gegenüberliegenden Seite des Fußbodenelements aufgebracht.

Es ist Aufgabe der Erfindung, ein Kompositelement mit verbesserter Schallreduzierung bereitzustellen, insbesondere ein Fußbodenelement und ein Möbelstück mit einem solchen Kompositelement.

Diese Aufgabe wird jeweils mit den Merkmalen der unabhängigen Ansprüche gelöst. Vorteilhafte Ausgestaltungen sind Gegenstand der Unteransprüche.

Gemäß Anspruch 1 wird ein Kompositelement mit Schallreduktionseffekt bereitgestellt. Das Kompositelement weist auf: eine Trägerplatte, eine mit der Trägerplatte verbundene Lackschicht, die Korkpulver enthält, und eine Deckschicht, die mit einer der Trägerplatte abgewandten Seite der Lackschicht verbunden ist.

Bei der Benutzung von Fußböden oder bei Möbelstücken kann ungewünschter Schall auftreten, der sowohl innerhalb des Raumes als auch in angrenzenden Räumen zu störenden Geräuschen führen kann. Die Lackschicht in Kombination mit dem Korkpulver reduziert den Schall der bei Benutzung des Kompositelements entsteht. Insbesondere wird der Schall von der Deckschicht auf die Lackschicht übertragen und durch das Korkpulver in der Lackschicht gedämpft.

Beispielsweise kann das Kompositelement ein Fußbodenelement sein, wobei durch die Lackschicht mit dem Korkpulver sowohl Gehschall und als auch Trittschall reduziert werden. Somit wird die Störung durch den Schall reduziert sowohl für die im Raum befindlichen Personen als auch für Personen in angrenzenden Räumen, zu denen sich der Schall über den Boden, die Decke oder die Wände ausbreiten könnte. Gehschall ist der durch das Begehen eines Fußbodens entstehende Schall, der im selben Raum wahrgenommen werden kann. Trittschall, ist der Schall, der sich beim Begehen des Fußbodens über den Unterbau des Fußbodens (nur durch Körperschallübertragung) auf andere Räume überträgt und dort wahrgenommenen wird.

Durch den Einsatz des Kompositelements ist es nicht notwendig, eine zusätzliche separate Lage für die Schalldämmung beim Verlegen eines Fußbodens unterhalb des Bodenbelags vorzusehen. Somit entfällt ein zusätzlicher Arbeitsschritt beim Verlegen des Fußbodens, wodurch sich die benötigte Zeit zum Verlegen verkürzt.

Alternativ kann das Kompositelement auch Teil eines Möbelstücks sein. Beispielswiese ist das Möbelstück ein Tisch. Bei Benutzung des Tisches, d.h. beim Arbeiten auf dessen Oberfläche, kann Schall entstehen, der zu ungewünschten Störungen im Raum führt. Dieser entstehende Schall wird durch die Lackschicht mit dem Korkpulver reduziert. Somit können Geräusche, die bei Benutzung des Tisches, beispielsweise durch Klappern von Stiften oder ähnliches auf der Tischoberfläche, verursacht werden, reduziert werden. Insbesondere kann dadurch die Störung in einem Klassenzimmer reduziert werden wodurch der Unterricht sowohl für Schüler als auch Lehrer angenehmer und effizienter ist.

Die Lackschicht mit dem Korkpulver zeichnet sich vorzugsweise dadurch aus, dass sie sich leicht, insbesondere maschinell, verarbeiten lässt.

Als 'Kompositelement' wird hierin ein Element mit mehreren Schichten, insbesondere mindestens drei Schichten (Trägerplatte, Lackschicht, Deckschicht) verstanden.

Vorzugsweise sind die einzelnen Schichten des Kompositelements durch Verkleben und/oder Verschmelzen und/oder Verpressen miteinander verbunden. Beispielsweise wird auf die Trägerplatte zunächst ein Primer aufgetragen, der die Haftung für die nachfolgend aufzutragende Lackschicht verbessert. Die Deckschicht ist vorzugsweise durch Schmelzpressung mit der Lackschicht verbunden. Bevorzugt hat die Lackschicht eine Viskosität, die geeignet ist, die Lackschicht maschinell zum Beispiel mittels Auftragswalze zu verarbeiten.

Vorzugsweise weist die Lackschicht eine Stärke von maximal 1,5 mm, 1,2 mm, 0,9 mm, 0,6 mm oder 0,3 mm aufweist, besonders bevorzugt eine Stärke von 0,2 mm oder im Wesentlichen 0,2 mm auf. Bevorzugt weist die Lackschicht eine Mindeststärke von 0,05 mm, 0,07 mm oder 0,1 mm auf. Derartige Schichtstärken können vorteilhaft in einem Zug aufgetragen werden, wodurch sich die Herstellung des Kompositelements vereinfacht.

Vorzugsweise weist die Lackschicht ein Flächengewicht im Bereich von 60 - 160 g/m², 70 - 140 g/m², 80 - 120 g/m² oder 90 - 100 g/m² auf.

Bevorzugt besteht die Lackschicht aus einem UV- aushärtbaren oder UV-ausgehärteten Lack.

Vorzugsweise besteht die Lackschicht nur aus natürlichen Bestandteilen, synthetischen Bestandteilen oder Mischungen daraus. Die Lackschicht kann ein Kunstharz-, Alkydharz-, Polyurethanoder Nitrocelluloselack sein oder kann dieses aufweisen. Je nach Anforderung kann so eine kostengünstige oder umweltfreundliche Beschichtung erzeugt werden, um anwendungsspezifische Beschichtungen (z.B. geeignet für Wohnraum) zu erzeugen. Die Lackschicht kann beispielsweise aus wässrigen Lacken, synthetische Lacken, wie Polyester, Polyurethan, Epoxid, Acrylate, hergestellt sein.

Vorzugsweise bildet die oben genannte Lackschicht eine erste Lackschicht aus und das Kompositelement weist eine zweite Lackschicht auf, die Korkpulver enthält, und auf einer der ersten Lackschicht abgewandten Seite der Trägerplatte angeordnet ist. Durch die zusätzliche zweite Lackschicht mit dem Korkpulver ergibt sich im Vergleich einer einzigen Lackschicht mit Korkpulver eine verbesserte Schallreduktion.

Die zweite Lackschicht ist vorzugsweise wie die erste Lackschicht ausgebildet. Alle Merkmale der hierein beschriebenen (ersten) Lackschicht sind ebenfalls auf die zweite Lackschicht anwendbar.

Vorzugsweise weist das Korkpulver eine Körnung bzw. Korngröße (vorzugsweise mittlere Korngröße) im Bereich von 0,1 bis 1 mm, 0,1 bis 0,8 mm, 0,1 bis 0,5 mm oder 0,1 bis 0,3 mm auf. Diese Körnung erlaubt eine einfache Verarbeitung und gewährleistet eine entsprechende Schallreduzierung bzw. Schalldämmung.

Vorzugsweise ist die (mittlere) Korngröße bzw. Körnung des Korkpulvers kleiner oder gleich der Stärke der Lackschicht.

Beispielsweise kann das Korkpulver bei einer Lackschicht mit einer Stärke von 1,5 mm eine (mittlere) Korngröße in einem Bereich von 0,1 bis 1,5 mm, 0,1 bis 1 mm, 0,1 bis 0,8 mm, 0,1 bis 0,5 mm oder 0,1 bis 0,3 mm aufweisen.

Beispielsweise kann das Korkpulver bei einer Lackschicht mit einer Stärke von 1,2 mm eine (mittlere) Korngröße in einem Bereich von 0,1 bis 1,2 mm, 0,1 bis 1 mm, 0,1 bis 0,8 mm, 0,1 bis 0,5 mm oder 0,1 bis 0,3 mm aufweisen.

Beispielsweise kann das Korkpulver bei einer Lackschicht mit einer Stärke von 0,9 mm eine (mittlere) Korngröße in einem Bereich von 0,1 bis 0,9 mm, 0,1 bis 0,8 mm, 0,1 bis 0,5 mm oder 0,1 bis 0,3 mm aufweisen.

Beispielsweise kann das Korkpulver bei einer Lackschicht mit einer Stärke von 0,6 mm eine (mittlere) Korngröße in einem Bereich von 0,1 bis 0,6 mm, 0,1 bis 0,5 mm oder 0,1 bis 0,3 mm aufweisen.

Beispielsweise kann das Korkpulver bei einer Lackschicht mit einer Stärke von 0,3 mm eine (mittlere) Korngröße in einem Bereich von 0,1 bis 0,3 mm oder 0,1 bis 0,2 mm aufweisen.

Beispielsweise kann das Korkpulver bei einer Lackschicht mit einer Stärke von 0,2 mm eine (mittlere) Korngröße in einem Bereich von 0,1 bis 0,2 mm aufweisen.

Das Korkpulver kann eine Körnung einer einzigen oder im Wesentlichen einer einzigen Korngröße (d.h. die Korkpulverpartikel haben die gleiche oder im Wesentlichen gleiche Korngröße) oder verschiedener Korngrößen haben. Die Bandbreite der verwendeten Korngrößen kann dabei hinsichtlich der gewünschten Verarbeitbarkeit angepasst sein. Bei der industriellen Verarbeitung erzeugt die Verwendung einer einzigen Korngröße eine gute und gleichbleibende Qualität des Kompositelements und dessen Schallreduktionseffekts. Bevorzugt ist das Korkpulver räumlich gleichmäßig innerhalb der Lackschicht verteilt. Dadurch wird eine gleichmäßige Schallreduktion über das gesamte Kompositelements hinweg gewährleistet.

Vorzugsweise liegt der Anteil des Korkpulvers in der Lackschicht im Bereich von 5 bis 75 vol%, 5 bis 65 vol%, 5 bis 60 vol% oder 5 bis 50 vol%.

Bevorzugt ist die Lackschicht in einer einzigen Lage auf die Trägerplatte aufgebracht. Die Lackschicht kann vollflächig auf die Trägerplatte aufgetragen sein. Bevorzugt ist die Lackschicht in einem Zug bzw. einem Arbeitsschritt auf die Trägerplatte aufgebracht.

Dadurch ist eine einfache und schnelle Herstellung möglich. Alternativ kann die Lackschicht aus mehreren einzeln aufgebrachten Lackschichten ausgebildet sein.

Vorzugsweise ist die Deckschicht aus einer mit der Lackschicht verbundenen Dekorschicht und/oder Nutzschicht ausgebildet. Die Nutzschicht ist vorzugsweise außenliegend an einer der Lackschicht gegenüberliegenden Seite der Dekorschicht angeordnet. Die Nutzschicht kann aus Melaminharz oder einer Polymerfolie beispielsweise aus Polyvinylchlorid, Polyester, Polyethylen, Polyurethan, Polyolefin oder einem Gemisch dieser Polymere ausgebildet sein.

Die Dekorschicht bildet die optisch wahrgenommene Oberfläche. Bei einer Implementierung des Kompositelements als Fußbodenlaminat kann die Dekorschicht beispielsweise aus Papier oder einer Folie ausgebildet sein. Auf der Dekorschicht können Motive wie beispielsweise Holzstrukturen, das Aussehen von Stein, Fliesen oder ähnliches aufgedruckt sein. Alternativ kann die Dekorschicht direkt auf die Nutzschicht aufgedruckt sein. Vorzugsweise wird bei der Herstellung die Nutzschicht in flüssiger Form und insbesondere flüssiges Melaminharz auf die Dekorschicht aufgetragen.

Bei einer Implementierung des Kompositelements als Fußbodenparkett ist die Dekorschicht vorzugsweise aus Echtholz ausgebildet. Beispielsweise wird auf die Lackschicht ein dünnes Echtholzfurnier aufgeklebt. Das Echtholz kann eine Stärke im Bereich von 0,3 - 0,5 mm, 0,5 - 1,5 mm oder 1 - 3,5 mm haben. Vorzugsweise ist auf der Unterseite der Trägerplatte eine Gegenzugschicht aufgetragen, beispielsweise ebenso eine Schicht aus (günstigem) Echtholzfurnier und/oder beispielsweise in der gleichen Schichtstärke wie die sichtbare Echtholz-Dekorschicht. Vorzugsweise ist dann die zweite Lackschicht (s.u.) auf der Unterseite der Gegenzugschicht aufgetragen. Auf der Echtholzschicht kann beispielsweise ein Lack oder Öl aufgetragen sein. Alternativ kann die Gegenzugschicht aus Papier, Kunststoff, UV-Lack oder UV-Trittschalllack ausgebildet sein.

Vorzugsweise besteht die Trägerplatte aus druckfestem Holzwerkstoff und ist insbesondere als mitteldichte (MDF) oder hochdichte und/oder hochverdichtete (HDF) Faserplatte ausgebildet. Alternativ kann die Trägerplatte aus einem Kunststoff wie beispielsweise Vinyl ausgebildet sein.

Die Trägerplatte kann eine Schichtdicke im Bereich von 2 bis 4 mm, 3 bis 5 mm, 4 bis 6 mm, oder 5 bis 8 mm aufweisen.

Wenn das Schallreduktionselement als Fußbodenelement ausgestaltet ist, kann die Trägerplatte für eine passgenaue Verbindung der Fußbodenelemente eine Profilierung aufweisen, beispielsweise überstehende Kanten oder Kanten für eine Nut-Feder-Verbindung. Somit ergibt sich eine leichte Verlegung und eine stabile Verbindung zwischen den Fußbodenelementen. Die Profilierungen können stirnseitig und/oder längsseitig am Fußbodenelement vorgesehen sein.

Weiterhin kann das Fußbodenelement eine Gegenzugschicht aufweisen, die auf einer der Lackschicht abgewandten Seite der Trägerplatte angeordnet ist. Die Gegenzugschicht kann beispielsweise aus Papier Kunststoff, UV-Lack oder UV-Trittschalllack ausgebildet sein. Die Gegenzugschicht verhindert, dass sich das Fußbodenelement bei Belastung durch die auftretenden Biegekräfte verformt. Wenn die zweite Lackschicht vorhanden ist, ist diese vorzugsweise auf einer der Trägerplatte abgewandten Seite der Gegenzugschicht angeordnet.

Weiterhin wird ein Fußbodenelement mit oder ausgebildet aus einem Kompositelement wie hierin beschrieben bereitgestellt, wobei die Deckschicht des Kompositelements die Sichtseite bzw. Oberseite des Fußbodenelements ausbildet. Vorzugsweise ist das Kompositelement in Form des Fußbodenelements ausgebildet. Die Form und Größe kann je nach Anwendungsfall variiert bzw. angepasst werden. In diesem Fall bildet die Trägerplatte des Kompositelements die Trägerplatte des Fußbodenelements aus und die Deckschicht des Kompositelements bildet die Nutzschicht und/oder Dekorschicht des Fußbodenelements aus.

Weiterhin wird ein Möbelstück mit oder ausgebildet aus einem Kompositelement wie hierin beschrieben bereitgestellt, wobei das Kompositelement derart angeordnet ist, dass die Deckschicht des Kompositelements nach außen gerichtet ist. Vorzugsweise ist die Deckschicht die sichtbare Außenseite des (geschlossenen) Möbelstücks. Vorzugsweise erstreckt sich das Kompositelement und insbesondere die Lackschicht über die gesamte oder im Wesentlichen gesamte Außenfläche des Möbelstücks.

Beispielsweise ist das Möbelstück ein Tisch, wobei insbesondere die Tischplatte aus dem Kompositelement ausgebildet ist und die Deckschicht nach oben gerichtet ist bzw. die Tischoberfläche ausbildet.

Einzelne Merkmale, die in dieser Beschreibung oben oder unten oder in den Ansprüchen offenbart sind, können in jeglicher Kombination oder Unterkombination miteinander beansprucht werden. Merkmale des Kompositelements, des Fußbodenelements und des Möbelstücks können untereinander kombiniert sein als Einzelmerkmal oder in beliebiger Unterkombination von Merkmalen. Wenn hier die Konjunktion "und/oder" verwendet wird, werden alle logischen Elemente und Kombinationen einzeln offenbart; z.B. offenbart a, b und/oder c die Elemente/Kombinationen a, b, c, ab, ac, bc sowie abc.

Anhand von Figuren werden Ausführungsformen der Erfindung näher erläutert. Es zeigen:
- Fig. 1: einen seitlichen Querschnitt eines Kompositelements, insbesondere eines flächigen Fußbodenelements,
- Fig. 2: einen seitlichen Querschnitt eines weiteren Kompositelements, und
- Fig. 3: einen seitlichen Querschnitt eines Tisches mit einer Kompositplatte.

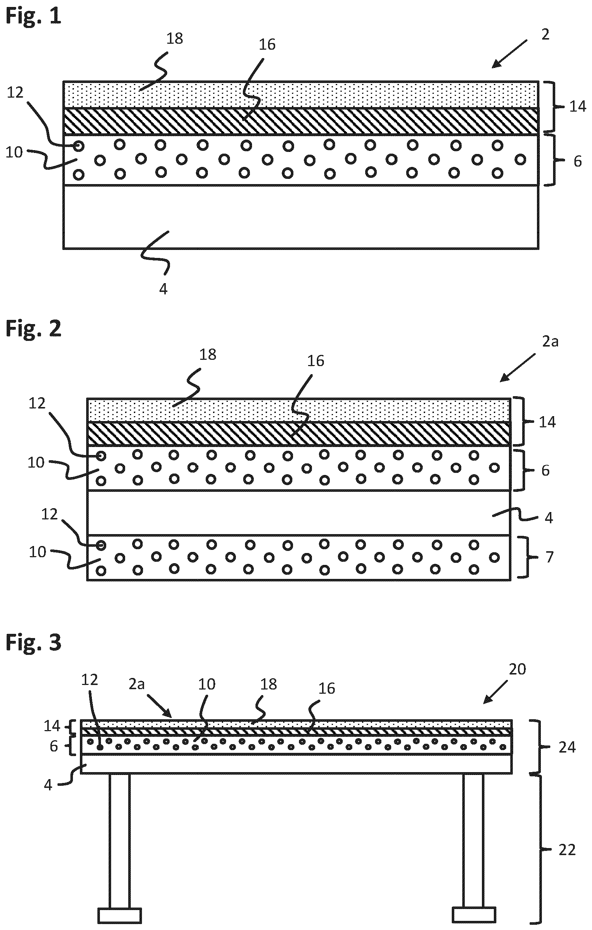

Fig. 1 zeigt einen seitlichen Querschnitt eines Kompositelement 2 mit Schallreduktionseffekt. Das Kompositelement 2 kann beispielsweise als Fußbodenelement ausgebildet sein. Das Kompositelement 2 weist auf: eine Trägerplatte 4, eine mit der Trägerplatte 4 verbundene Lackschicht 6, die Korkpulver 12 enthält, und eine Deckschicht 14, die mit einer der Trägerplatte 4 abgewandten Seite der Lackschicht 6 verbunden ist. Die Größe und Form des Kompositelements 2 kann je nach Anwendungsfall variiert bzw. angepasst werden. Die Lackschicht 6 dient zur Schalldämmung und insbesondere bei der Implementierung als Fußbodenelement der Reduktion von Gehschall und Trittschall.

Die Trägerplatte 4 ist vorzugsweise aus einem druckfestem Holzwerkstoff ausgebildet und insbesondere als mitteldichte (MDF) oder hochdichte und/oder hochverdichtete (HDF) Faserplatte ausgebildet. Alternativ kann die Trägerplatte 4 aus einem Kunststoff wie beispielsweise Vinyl ausgebildet sein.

Die Lackschicht 6 besteht bevorzugt nur aus natürlichen Bestandteilen, synthetischen Bestandteilen kann aber auch aus Mischungen daraus bestehen. Beispielsweise ist die Lackschicht 6 ein Kunstharz-, Alkydharz-, Polyurethan- oder Nitrocelluloselack.

Die Lackschicht 6 kann beispielsweise eine Stärke von 0,2 mm oder im Wesentlichen 0,2 mm und/oder ein Flächengewicht im Bereich von 90 - 100 g/m² aufweisen. Vorzugsweise weist die Lackschicht 6 einen UV-aushärtbaren oder UV-ausgehärteten Lack 10 auf.

Die Lackschicht 6 weist das Korkpulver 12 auf bzw. das Korkpulver 12 ist in der Lackschicht aufgenommen (d.h. dispergiert). Bevorzugt ist das Korkpulver 12 gleichmäßig im Lack 10 der Lackschicht 6 verteilt und weist besonders bevorzugt nur eine einzige Korngröße auf oder hat eine Korngrößenverteilung, die eine glockenförmige Verteilung (z.B. Gaußverteilung) um den Mittelwert hat. Die Körnung des Korkpulvers 12 (d.h. die Korngröße der Korkpulverpartikel) ist vorzugsweise im Bereich von 0,1 bis 0,3 mm. Vorteilhafterweise hat das Korkpulver 12 eine Körnung einer einzigen Korngröße, es können aber auch vorbestimmte Bandbreiten von verschiedenen Korngrößen eingesetzt werden. Der Anteil des Korkpulvers in der Lackschicht 6 kann beispielsweise im Bereich von 5 bis 50 vol% liegen.

Die Deckschicht 14 kann aus einer mit der Lackschicht 6 verbundenen Dekorschicht 16 und/oder einer Nutzschicht 18 ausgebildet sein. Vorzugsweise weist die Deckschicht 14 die Dekorschicht 16 und die Nutzschicht 18 auf, wobei die Nutzschicht 18 vorzugsweise außenliegend an einer der Lackschicht 6 gegenüberliegenden Seite der Dekorschicht 16 angeordnet ist.

Die Nutzschicht 18 kann beispielsweise ausgebildet sein aus Melaminharz oder einer Polymerfolie beispielsweise aus Polyvinylchlorid, Polyester, Polyethylen, Polyurethan, Polyolefin oder einem Gemisch dieser Polymere.

Fig. 2 ist ein seitlicher Querschnitt eines weiteren Kompositelements 2a. Das Kompositelement 2a unterscheidet sich dadurch von dem Kompositelement 2 in Fig. 1, dass das Kompositelement 2a zusätzlich zur ersten Lackschicht 6 (vgl. Fig. 1) eine zweite Lackschicht 7 aufweist, die Korkpulver 12 enthält, und auf einer der ersten Lackschicht 6 abgewandten Seite der Trägerplatte 4 angeordnet ist. Bei einem Bodenbelag ist die zweite Lackschicht beispielsweise auf der Unterseite der Trägerplatte 4. Die zweite Lackschicht 7 ist vorzugsweise identisch zur ersten Lackschicht 6 ausgebildet. Alle weiteren Merkmale die in Bezug zu dem Kompositelement 2 in Fig. 1 (und 3) hierein beschrieben sind, gelten ebenfalls für das Kompositelement 2a in Fig. 2.

Im Rahmen der Figuren 1 und 2 ist die beispielhafte Anwendung der Kompositelemente 2, 2a als Fußbodenelement beschrieben.

Wie in Fig. 3 gezeigt kann das Kompositelement 2 (oder Kompositelement 2a) alternativ bei einem Möbelstück wie beispielsweise einem Tisch 20 zum Einsatz kommen. Der Tisch 20 weist ein Tischgestell 22 und eine auf dem Tischgestell 22 angeordnete Tischplatte 24 auf. Wie in Fig. 3 dargestellt kann die Tischplatte 24 das Kompositelement 2 aufweisen bzw. aus dem Kompositelement 2 ausgebildet sein, wobei die Deckschicht 14 nach oben zeigt und die Oberseite der Tischplatte 24 ausbildet.

Bei Benutzung des Tisches 20 wird Schall, der beispielsweise durch Klopfen, Klappern von Stiften oder ähnlichem auf der Tischplatte 24 entsteht, durch das Kompositelement 2 und insbesondere durch die Lackschicht 6 reduziert. Somit kann beispielsweise der Geräuschpegel in einem Klassenzimmer reduziert werden.

### Bezugszeichen

- 2, 2a: Kompositelement (z. B. Fußbodenelement oder Möbelstück)
- 4: Trägerplatte
- 6, 7: erste / zweite Lackschicht
- 10: Lack
- 12: Korkpulver
- 14: Deckschicht
- 16: Dekorschicht
- 18: Nutzschicht
- 20: Tisch
- 22: Tischgestell
- 24: Tischplatte

## Patentansprüche

1. Kompositelement (2, 2a) mit Schallreduktionseffekt, das aufweist:
eine Trägerplatte (4),
eine mit der Trägerplatte (4) verbundene Lackschicht (6), die Korkpulver (12) enthält, und
eine Deckschicht (14), die mit einer der Trägerplatte (4) abgewandten Seite der Lackschicht (6) verbunden ist.

2. Kompositelement nach Anspruch 1, wobei die Lackschicht (6) eine Stärke von maximal 1,5 mm, 1,2 mm, 0,9 mm, 0,6 mm oder 0,3 mm aufweist, besonders bevorzugt eine Stärke von 0,2 mm oder im Wesentlichen 0,2 mm aufweist, und/oder
wobei die Lackschicht (6) ein Flächengewicht im Bereich von 60 - 160 g/m², 70 - 140 g/m², 80 - 120 g/m² oder 90 - 100 g/m² aufweist.

3. Kompositelement nach Anspruch 1 oder 2, wobei die Lackschicht (6) aus einem UV-aushärtbarem oder UV-ausgehärteten Lack besteht.

4. Kompositelement nach Anspruch 1, 2 oder 3,
wobei die Lackschicht (6) nur aus natürlichen Bestandteilen, synthetischen Bestandteilen oder Mischungen daraus besteht, und/oder
wobei die Lackschicht (6) ein Kunstharz-, Alkydharz-, Polyurethanoder Nitrocelluloselack ist oder aufweist.

5. Kompositelement nach einem der vorhergehenden Ansprüche, wobei das Korkpulver (12) eine Körnung im Bereich von 0,1 bis 1 mm, 0,1 bis 0,8 mm, 0,1 bis 0,5 mm oder 0,1 bis 0,3 mm aufweist.

6. Kompositelement nach einem der vorhergehenden Ansprüche, wobei das Korkpulver (12) eine Körnung einer einzigen oder im Wesentlichen einer einzigen Korngröße oder verschiedener Korngrößen hat.

7. Kompositelement nach einem der vorhergehenden Ansprüche, wobei der Anteil des Korkpulvers (12) in der Lackschicht (6, 7) im Bereich von 5 bis 75 vol%, 5 bis 65 vol%, 5 bis 60 vol% oder 5 bis 50 vol% liegt.

8. Kompositelement nach einem der vorhergehenden Ansprüche, wobei die Lackschicht (6) in einer einzigen Lage aufgebracht ist.

9. Kompositelement nach einem der vorhergehenden Ansprüche, wobei die Deckschicht (14) aus einer mit der Lackschicht (6) verbundenen Dekorschicht (16) und/oder Nutzschicht (18) ausgebildet ist, und
wobei vorzugsweise die Nutzschicht (18) außenliegend an einer der Lackschicht (6) gegenüberliegenden Seite der Dekorschicht (16) angeordnet ist, und/oder
wobei vorzugsweise die Nutzschicht (18) aus Melaminharz oder einer Polymerfolie beispielsweise aus Polyvinylchlorid, Polyester, Polyethylen, Polyurethan, Polyolefin oder einem Gemisch dieser Polymere ausgebildet ist, oder
wobei vorzugsweise die Nutzschicht eine Furnierschicht ist, weiter bevorzugt eine Echtholz-Furnierschicht.

10. Kompositelement nach einem der vorhergehenden Ansprüche,
wobei die Trägerplatte (4) aus druckfestem Holzwerkstoff ist und insbesondere als mitteldichte (MDF) oder hochdichte und/oder hochverdichtete (HDF) Faserplatte ausgebildet ist, oder
wobei die Trägerplatte (4) aus einem Kunststoff wie beispielsweise Vinyl ausgebildet ist.

11. Kompositelement nach einem der vorhergehenden Ansprüche, wobei die Lackschicht (6) eine erste Lackschicht ausbildet und das Kompositelement (2a) eine zweite Lackschicht (7) aufweist, die Korkpulver (12) enthält, und auf einer der ersten Lackschicht (6) abgewandten Seite der Trägerplatte (4) angeordnet ist.

12. Fußbodenelement mit oder ausgebildet aus einem Kompositelement (2, 2a) nach einem der vorhergehenden Ansprüche, wobei die Deckschicht (14) des Kompositelements (2) eine Sichtseite des Fußbodenelements ausbildet.

13. Möbelstück (20) mit oder ausgebildet aus einem Kompositelement (2, 2a) nach einem der Ansprüche 1 bis 11, wobei das Kompositelement (2, 2a) derart angeordnet ist, dass am Möbelstück die Deckschicht (14) des Kompositelements (2, 2a) nach außen gerichtet ist.
